(19) Europäisches Patentamt
European Patent Office
Office européen des brevets

(11) **EP 3 355 277 A1**

(12) **DEMANDE DE BREVET EUROPEEN**

(43) Date de publication:
**01.08.2018 Bulletin 2018/31**

(51) Int Cl.:
**G06T 17/00** (2006.01)  **G06T 19/00** (2011.01)
**G06T 15/50** (2011.01)

(21) Numéro de dépôt: **18150567.8**

(22) Date de dépôt: **08.01.2018**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**MA MD TN**

(30) Priorité: **26.01.2017  FR 1750644**

(71) Demandeur: **Parrot Air Support**
**75010 Paris (FR)**

(72) Inventeurs:
• **BOULANGER, Patrice**
 **94110 ARCUEIL (FR)**
• **PELLEGRINO, Giulio**
 **75014 PARIS (FR)**
• **FOURNIER, Louis-Joseph**
 **78220 VIROFLAY (FR)**

(74) Mandataire: **Lavoix**
 **2, place d'Estienne d'Orves**
 **75441 Paris Cedex 09 (FR)**

(54) **PROCÉDÉ D'AFFICHAGE SUR UN ÉCRAN D'AU MOINS UNE REPRÉSENTATION D'UN OBJET, PROGRAMME D'ORDINATEUR, DISPOSITIF ET APPAREIL ÉLECTRONIQUES D'AFFICHAGE ASSOCIÉS**

(57) Ce procédé d'affichage d'au moins une représentation d'un objet est mis en oeuvre par un dispositif électronique d'affichage. Il comprend l'acquisition (100) d'une pluralité d'images de l'objet, les images acquises correspondant à différents angles de prise de vue de l'objet ; le calcul (110) d'un modèle en perspective de l'objet à partir de la pluralité d'images ; et l'affichage (120), suivant un premier mode, du modèle en perspective.

Le procédé comprend en outre la commutation (140) vers un deuxième mode, en cas de détection (130) d'une sélection, par un utilisateur, d'un point sur le modèle affiché suivant le premier mode ; l'affichage (160), suivant le deuxième mode, d'au moins une des images acquises ; l'acquisition (150) d'au moins une image infrarouge de l'objet, et lors de l'affichage (160) suivant le deuxième mode, au moins une image infrarouge de l'objet est affichée en superposition, au moins partielle, de l'image acquise affichée.

FIG.6

**Description**

La présente invention concerne un procédé d'affichage sur un écran d'affichage d'au moins une représentation d'un objet.

Le procédé est mis en oeuvre par un dispositif électronique d'affichage et comprend l'acquisition d'une pluralité d'images de l'objet, les images acquises correspondant à différents angles de prise de vue de l'objet ; le calcul d'un modèle en perspective de l'objet à partir de la pluralité d'images acquises ; et l'affichage, sur l'écran d'affichage et suivant un premier mode d'affichage, du modèle en perspective de l'objet.

L'invention concerne également un programme d'ordinateur comportant des instructions logicielles qui, lorsqu'elles sont exécutées par un ordinateur, mettent en oeuvre un tel procédé d'affichage.

L'invention concerne également un dispositif électronique d'affichage sur un écran d'affichage d'au moins une représentation d'un objet.

L'invention concerne également un appareil électronique d'affichage d'au moins une représentation d'un objet, l'appareil comprenant un écran d'affichage et un tel dispositif électronique d'affichage.

L'invention concerne le domaine de l'affichage sur un écran d'affichage de représentation(s) d'un objet. L'objet s'entend au sens large comme n'importe quel élément apte à être pris en image par un capteur d'image(s). L'objet est notamment un bâtiment, tel qu'un bâtiment apte à être survolé par un drone, et les images acquises sont alors des images prises par au moins un capteur d'images équipant le drone.

La représentation d'un objet s'entend également au sens large comme une vue de l'objet apte à être affichée sur un écran d'affichage, qu'il s'agisse par exemple d'une image prise par un capteur d'image(s), puis acquise par le dispositif électronique d'affichage pour être affichée, ou encore d'un modèle en perspective de l'objet, par exemple calculé par le dispositif électronique d'affichage.

Par modèle en perspective, également appelé modèle en trois dimensions, ou modèle 3D, on entend une représentation de l'enveloppe extérieure, ou encore de la surface extérieure ou du contour extérieur, de l'objet, calculée par un module électronique de calcul. En outre, lorsqu'un tel modèle en perspective est affiché, l'utilisateur a généralement la possibilité de faire pivoter ce modèle autour de différents axes afin de voir le modèle de l'objet sous différents angles de vue.

On connait un procédé d'affichage du type précité. Le modèle en perspective de l'objet est calculé à partir d'images de l'objet sous différents angles de prise de vue, préalablement acquises, et ce modèle est alors affiché à l'écran, en permettant en outre à l'utilisateur de le faire pivoter autour de différents axes afin de le voir sous différents angles de vue.

Toutefois, même si l'affichage d'un tel modèle permet à l'utilisateur de mieux percevoir le volume et le contour extérieur de l'objet, son utilité est relativement limitée.

Le but de l'invention est alors de proposer un procédé d'affichage, et un dispositif électronique d'affichage associé, permettant d'offrir une fonctionnalité supplémentaire à l'affichage du modèle en perspective.

A cet effet, l'invention a pour objet un procédé d'affichage sur un écran d'affichage d'au moins une représentation d'un objet, le procédé étant mis en oeuvre par un dispositif électronique d'affichage et comprenant :

- l'acquisition d'une pluralité d'images de l'objet, les images acquises correspondant à différents angles de prise de vue de l'objet ;
- le calcul d'un modèle en perspective de l'objet à partir de la pluralité d'images acquises ;
- l'affichage, sur l'écran d'affichage et suivant un premier mode d'affichage, du modèle en perspective de l'objet ;
- la commutation vers un deuxième mode d'affichage, en cas de détection d'une sélection, par un utilisateur, d'un point sur le modèle affiché suivant le premier mode ;
- l'affichage, sur l'écran d'affichage et suivant le deuxième mode, d'au moins une des images acquises ;
- l'acquisition d'au moins une image d'un rayonnement infrarouge de l'objet, et

lors de l'affichage suivant le deuxième mode d'au moins une image acquise, au moins une image acquise du rayonnement infrarouge de l'objet est affichée en superposition, au moins partielle, de l'image acquise affichée.

Avec le procédé d'affichage selon l'invention, l'affichage, suivant le premier mode d'affichage, du modèle en perspective de l'objet permet à l'utilisateur de bien percevoir le volume et le contour extérieur de l'objet.

Ensuite, la commutation vers le deuxième mode d'affichage, suite à une sélection par l'utilisateur d'un point sur le modèle affiché suivant le premier mode, permet de visualiser dans ce deuxième mode directement des images acquises de l'objet. Ce deuxième mode d'affichage permet alors à l'utilisateur d'obtenir davantage d'informations sur un ou plusieurs points du modèle, en sélectionnant successivement chaque point, puis en visualisant les images acquises de l'objet correspondant à chaque point. En outre, chaque point sélectionné est de préférence repéré par un marqueur sur chaque image acquise affichée.

Suivant d'autres aspects avantageux de l'invention, le procédé d'affichage comprend une ou plusieurs des caractéristiques suivantes, prises isolément ou suivant toutes les combinaisons techniquement possibles :

- lors de l'affichage suivant le deuxième mode d'au moins une image acquise, le point sélectionné est repéré par un marqueur sur chaque image acquise affichée ;
- lors de l'affichage suivant le deuxième mode d'au moins une image acquise, l'image acquise affichée est visible par transparence à travers l'image du rayonnement infrarouge, affichée en superposition ;
- lors de l'affichage suivant le deuxième mode d'au moins une image acquise, un cadre est affiché en superposition de l'image acquise affichée, et un agrandissement de l'image acquise correspondant à la zone de l'image située à l'intérieur du cadre est affiché en outre sur l'écran d'affichage,

l'affichage dudit cadre étant de préférence commandé suite à une action de l'utilisateur ;

- la position du cadre affiché en superposition est variable par rapport à l'image acquise affichée,

la variation de la position dudit cadre étant de préférence commandée suite à une action de l'utilisateur ;

- l'objet est un bâtiment apte à être survolé par un drone, et les images acquises sont des images prises par au moins un capteur d'images équipant le drone.

L'invention a également pour objet un programme d'ordinateur comportant des instructions logicielles qui, lorsqu'elles sont exécutées par un ordinateur, mettent en oeuvre un procédé d'affichage tel que défini ci-dessus.
L'invention a également pour objet un dispositif électronique d'affichage sur un écran d'affichage d'au moins une représentation d'un objet, le dispositif comprenant :

- un module d'acquisition configuré pour acquérir une pluralité d'images de l'objet, les images acquises correspondant à différents angles de prise de vue de l'objet ;
- un module de calcul configuré pour calculer un modèle en perspective de l'objet à partir de la pluralité d'images acquises ;
- un module d'affichage configuré pour afficher, sur l'écran d'affichage et suivant un premier mode d'affichage, le modèle en perspective de l'objet ;
- un module de commutation configuré pour commuter vers un deuxième mode d'affichage, en cas de détection d'une sélection, par un utilisateur, d'un point sur le modèle affiché suivant le premier mode ;

le module d'affichage étant configuré pour afficher, sur l'écran d'affichage et suivant le deuxième mode, au moins l'une des images acquises,
le module d'acquisition étant configuré en outre acquérir au moins une image d'un rayonnement infrarouge de l'objet, et
le module d'affichage étant configuré pour afficher en outre au moins une image acquise du rayonnement infrarouge de l'objet en superposition, au moins partielle, de l'image acquise affichée.
Suivant un autre aspect avantageux de l'invention, le dispositif électronique d'affichage comprend la caractéristique suivante :

- le dispositif est un serveur Web accessible via le réseau Internet.

L'invention a également pour objet un appareil électronique d'affichage d'au moins une représentation d'un objet, l'appareil comprenant un écran d'affichage et un dispositif électronique d'affichage, sur l'écran d'affichage, d'au moins une représentation de l'objet, le dispositif électronique d'affichage étant tel que défini ci-dessus.
Ces caractéristiques et avantages de l'invention apparaîtront plus clairement à la lecture de la description qui va suivre, donnée uniquement à titre d'exemple non limitatif, et faite en référence aux dessins annexés, sur lesquels :

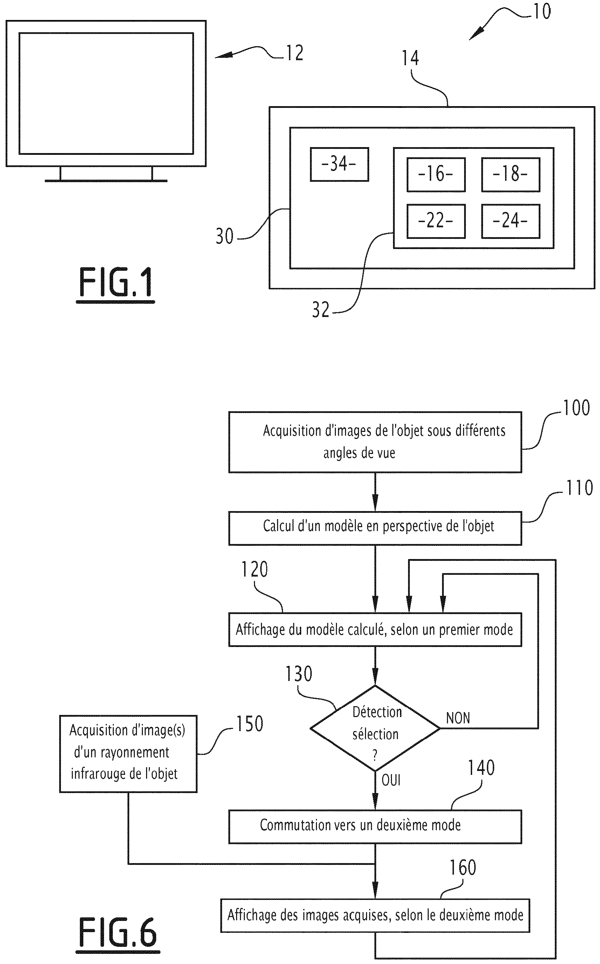

- la figure 1 est une représentation schématique d'un appareil électronique d'affichage selon l'invention, l'appareil comprenant un écran d'affichage et un dispositif électronique d'affichage, sur l'écran, d'au moins une représentation d'un objet, le dispositif électronique d'affichage comportant un module d'acquisition configuré pour acquérir une pluralité d'images de l'objet, un module de calcul configuré pour calculer un modèle en perspective de l'objet à partir des images acquises, un module d'affichage configuré pour afficher sur l'écran et suivant un premier mode d'affichage le modèle en perspective de l'objet, un module de commutation configuré pour commuter vers un deuxième mode d'affichage, en cas de détection d'une sélection d'un point sur le modèle affiché suivant le premier mode, le module d'affichage étant configuré pour afficher sur l'écran et suivant le deuxième mode au moins l'une des images acquises ;
- la figure 2 est une vue du modèle en perspective de l'objet affiché suivant le premier mode d'affichage, l'objet étant un bâtiment ;
- les figures 3 à 5 représentent des vues, pour différents angles de vue, d'images affichées suivant le deuxième mode d'affichage ; et
- la figure 6 est un organigramme d'un procédé d'affichage selon l'invention.

Dans la suite de la description, l'expression « sensiblement constant(e) » s'entend comme une relation d'égalité à plus ou moins 10%, c'est-à-dire avec une variation d'au plus 10%, de préférence encore comme une relation d'égalité à plus ou moins 5%, c'est-à-dire avec une variation d'au plus 5%.

Sur la figure 1, un appareil électronique 10 d'affichage d'au moins une représentation d'un objet comprend un écran d'affichage 12 et un dispositif électronique 14 d'affichage, sur l'écran d'affichage 12, d'au moins une représentation de l'objet. L'écran d'affichage 12 est connu en soi.

Le dispositif électronique d'affichage 14 est configuré pour afficher sur l'écran d'affichage 12 au moins une représentation de l'objet, et comprend un module d'acquisition 16 configuré pour acquérir une pluralité d'images de l'objet, les images acquises correspondant à différents angles de prise de vue de l'objet.

Le dispositif électronique d'affichage 14 comprend également un module de calcul 18 configuré pour calculer un modèle en perspective 20 de l'objet à partir de la pluralité d'images acquises, et un module d'affichage 22 configuré pour afficher, sur l'écran d'affichage 12 et suivant un premier mode d'affichage M1, le modèle en perspective 20 de l'objet.

Selon l'invention, le dispositif électronique d'affichage 14 comprend en outre un module de commutation 24 configuré pour commuter vers un deuxième mode d'affichage M2, en cas de détection d'une sélection, par un utilisateur, d'un point sur le modèle 20 affiché suivant le premier mode M1, le module d'affichage 22 étant alors configuré pour afficher, sur l'écran d'affichage 12 et suivant le deuxième mode M2, au moins l'une des images acquises.

Dans l'exemple de la figure 1, le dispositif électronique d'affichage 14 comprend une unité de traitement d'informations 30, formée par exemple d'une mémoire 32 et d'un processeur 34 associé à la mémoire 32.

En complément facultatif, le dispositif électronique d'affichage 14 est un serveur Web accessible via le réseau Internet.

Dans l'exemple de la figure 1, le module d'acquisition 16, le module de calcul 18, le module d'affichage 22 et le module de commutation 24 sont réalisés chacun sous forme d'un logiciel exécutable par le processeur 34. La mémoire 32 de l'unité de traitement d'informations 30 est alors apte à stocker un logiciel d'acquisition configuré pour acquérir une pluralité d'images de l'objet correspondant à différents angles de prise de vue de l'objet, un logiciel de calcul configuré pour calculer le modèle en perspective 20 de l'objet à partir de la pluralité d'images acquises, un logiciel d'affichage configuré pour afficher sur l'écran d'affichage et suivant le premier mode d'affichage M1 le modèle en perspective 20, ainsi que suivant le deuxième mode d'affichage M2 les images acquises de l'objet, et un logiciel de commutation configuré pour commuter vers le deuxième mode d'affichage M2, en cas de détection d'une sélection, par un utilisateur, d'un point sur le modèle 20 affiché suivant le premier mode M1. Le processeur 34 de l'unité de traitement d'informations 30 est alors apte à exécuter le logiciel d'acquisition, le logiciel de calcul, le logiciel d'affichage et le logiciel de commutation.

En variante non représentée, le module d'acquisition 16, le module de calcul 18, le module d'affichage 22 et le module de commutation 24 sont réalisés chacun sous forme d'un composant logique programmable, tel qu'un FPGA (de l'anglais *Field Programmable Gate Array),* ou encore sous forme d'un circuit intégré dédié, tel qu'un ASIC (de l'anglais *Applications Specific Integrated Circuit).*

Le module d'acquisition 16 est configuré en outre acquérir au moins une image d'un rayonnement infrarouge de l'objet, et le module d'affichage 22 est configuré pour afficher en outre au moins une image acquise du rayonnement infrarouge de l'objet en superposition, au moins partielle, de l'image acquise affichée.

Le module de calcul 18 est configuré pour calculer le modèle en perspective 20 de l'objet à partir de la pluralité d'images acquises, le calcul du modèle en perspective 20 étant connu en soi et de préférence effectué par photogrammétrie.

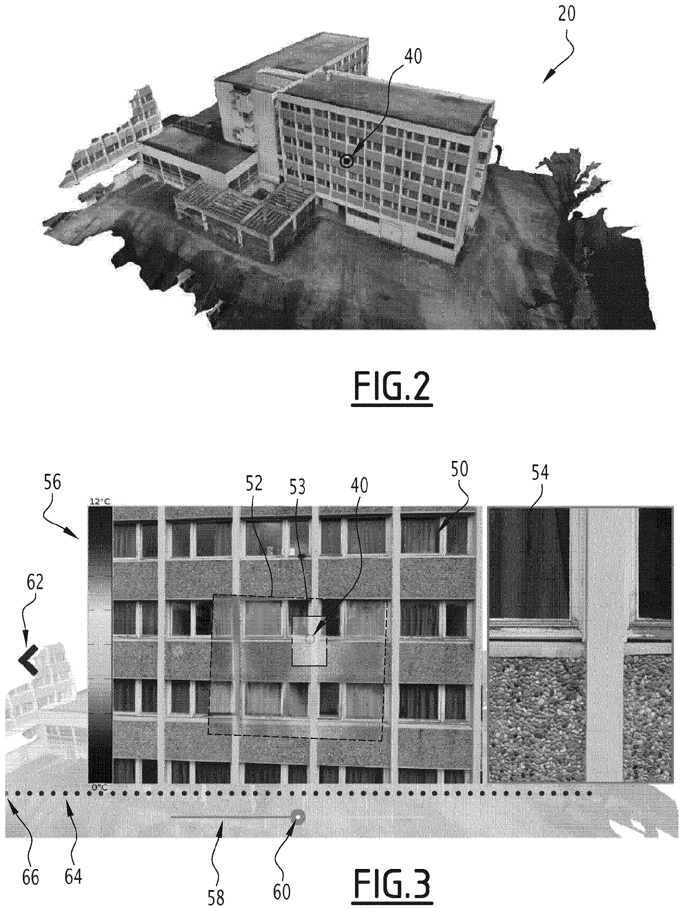

Le modèle en perspective 20, également appelé modèle en trois dimensions, ou modèle 3D, est une représentation de l'enveloppe extérieure, ou encore de la surface extérieure ou du contour extérieur, de l'objet, comme représenté sur la figure 2, où l'objet est un bâtiment.

Le module d'affichage 22 est configuré pour afficher le modèle en perspective 20 de l'objet suivant le premier mode d'affichage M1, et le module de commutation 24 est configuré pour détecter la sélection, par l'utilisateur, d'un point sur le modèle 20 affiché suivant le premier mode M1. Le module de commutation 24 est alors configuré pour déterminer des coordonnées P du point sélectionné dans un repère prédéfini, cette détermination des coordonnées P du point sélectionné étant connue en soi et effectuée de préférence à l'aide d'une bibliothèque logicielle servant à afficher le modèle en perspective 20. Le module de commutation 24 est alors configuré pour commuter, suite à cette détection, vers le deuxième mode d'affichage M2.

Le module d'affichage 22 est alors configuré pour afficher, suivant le deuxième mode M2, au moins l'une des images acquises. Afin de déterminer quelle(s) image(s) acquise(s) 50 afficher parmi la pluralité d'images acquises, le module d'affichage 22 est alors configuré pour recalculer, dans le repère du capteur d'image(s) et pour chaque image acquise, les coordonnées P' du point sélectionné, par exemple à l'aide de l'équation suivante :

$$P' = R^t \times (P - T) \qquad (1)$$

où P' = (X', Y', Z') représente les coordonnées du point sélectionné, dans le repère du capteur d'image(s) ;

P = (X, Y, Z) représente les coordonnées du point sélectionné, dans le repère prédéfini, également appelé repère initial ;

T = (Tx, Ty, Tz) représente la position du capteur d'image(s), dans le repère initial, c'est-à-dire les coordonnées du centre du capteur d'image(s), dans le repère initial ;

R est une matrice 3x3 représentant l'orientation du capteur d'image(s) dans le repère initial, $R^t$ étant la transposée de la matrice R.

L'homme du métier comprendra que P', P et T sont chacun un vecteur à 3 coordonnées, ou encore une matrice 3x1.

L'homme du métier notera que si Z' est négatif, alors cela signifie que le point sélectionné se trouvait derrière le capteur d'image(s) pour l'image acquise correspondante, cette image acquise étant alors écartée. Autrement dit, le module d'affichage 22 est alors configuré pour ignorer l'image acquise correspondante lorsque Z' est négatif, et ne pas l'afficher suivant le deuxième mode M2.

Lorsque Z' est positif, le module d'affichage 22 est ensuite configuré pour convertir en coordonnées homogènes, également appelées projection perspective, les coordonnées P' du point sélectionné, dans le repère du capteur d'image(s), par exemple à l'aide de l'équation suivante :

$$p' = \begin{pmatrix} u' \\ v' \end{pmatrix} = \begin{pmatrix} X'/Z' \\ Y'/Z' \end{pmatrix} \qquad (2)$$

où p' = (u', v') représente les coordonnées homogènes du point sélectionné, dans le repère du capteur d'image(s).

En complément facultatif, le module d'affichage 22 est ensuite configuré pour corriger des distorsions, telles que des distorsions tangentielle et radiale, d'une lentille optique disposée entre le capteur d'image(s) et l'objet, la lentille ayant servi à focaliser le rayonnement lumineux émis par l'objet dans un plan objet correspondant au capteur d'image(s).

Cette correction de distorsions est, par exemple, effectuée à l'aide des équations suivantes :

$$r = u' \cdot u' + v' \cdot v' \qquad (3)$$

$$dr = 1 + r \cdot RD1 + r^2 \cdot RD2 + r^3 \cdot RD3 \qquad (4)$$

$$dt0 = 2 \cdot TD1 \cdot u' \cdot v' + TD2 \cdot (r + 2 \cdot u' \cdot u') \qquad (5)$$

$$dt1 = 2 \cdot TD2 \cdot u' \cdot v' + TD1 \cdot (r + 2 \cdot v' \cdot v') \qquad (6)$$

$$u'' = u' \cdot dr + dt0 \qquad (7)$$

$$v'' = v' \cdot dr + dt1 \qquad (8)$$

où p" = (u", v") représente les coordonnées homogènes après correction de distorsions, dans le repère du capteur d'image(s) ;

(RD1, RD2, RD3) représente la distorsion radiale de la lentille optique ; et

(TD1, TD2) représente la distorsion tangentielle de la lentille optique.

Le module d'affichage 22 est configuré pour convertir les coordonnées homogènes du point sélectionné, éventuellement avec correction des distorsions dues à la lentille optique, en coordonnées dans le plan de l'image acquise correspondante.

Cette conversion des coordonnées homogènes en coordonnées dans le plan de l'image est, par exemple, effectuée à l'aide des équations suivantes :

$$u = f \cdot u'' + Cx \qquad (9)$$

$$v = f \cdot v'' + Cy \qquad (10)$$

où p = (u, v) représente les coordonnées, exprimées en pixels et dans le plan de l'image acquise correspondante, du point sélectionné, u désignant la position en abscisse et v désignant celle en ordonnée ;

f représente la focale de la lentille optique ; et

(Cx, Cy) représente un point principal dans l'image acquise correspondante, c'est-à-dire le point sur lequel est centré la lentille optique, ce point étant proche du centre de l'image, i.e. sensiblement au centre de l'image.

L'homme du métier comprendra bien entendu que, lorsque la correction des distorsions de la lentille optique n'est pas mise en oeuvre, la conversion des coordonnées homogènes en coordonnées dans le plan de l'image est, par exemple, effectuée à l'aide des équations suivantes :

$$u = f \cdot u' + Cx \qquad (11)$$

$$v = f \cdot v' + Cy \qquad (12)$$

Le module d'affichage 22 est ainsi configuré pour calculer les coordonnées en pixels et dans le plan de l'image acquise de la projection du point sélectionné, à partir des coordonnées P du point sélectionné dans le repère prédéfini, fournies par le module de commutation 24, ce calcul étant effectué à l'aide des équations (1) à (10) lorsque la correction des distorsions de la lentille optique est effectuée, ou bien à l'aide des équations (1) à (2), (11) et (12) lorsque la correction des distorsions de la lentille optique n'est pas effectuée.

Le module d'affichage 22 est alors configuré pour déterminer si le point sélectionné appartient ou non à l'image acquise correspondante, par exemple en comparant les coordonnées (u, v), calculées en pixels, avec les dimensions, exprimées en pixels, de l'image acquise correspondante. Par exemple, en notant respectivement W et H la largeur et la hauteur de l'image acquise correspondante, le module d'affichage 22 est configuré pour déterminer que le point sélectionné appartient à l'image acquise correspondante lorsqu'à la fois l'abscisse u appartient à l'intervalle [0 ; W] et l'ordonnée v appartient à l'intervalle [0 ; H].

Inversement, si l'abscisse u n'appartient pas à l'intervalle [0 ; W] ou si l'ordonnée v n'appartient pas à l'intervalle [0 ; H], alors l'image acquise correspondante est écartée par le module d'affichage 22 pour ce point sélectionné. Autrement dit, le module d'affichage 22 est configuré pour ignorer l'image acquise correspondante lorsque l'abscisse u n'appartient pas à l'intervalle [0 ; W] ou lorsque l'ordonnée v n'appartient pas à l'intervalle [0 ; H], et ne pas afficher ladite image acquise suivant le deuxième mode M2.

Le module d'affichage 22 est alors configuré pour afficher chaque image acquise 50 pour laquelle il a préalablement déterminé que les coordonnées de la projection, dans le plan de l'image, du point sélectionné sont incluses dans l'image acquise, cette détermination préalable étant effectuée comme décrit précédemment.

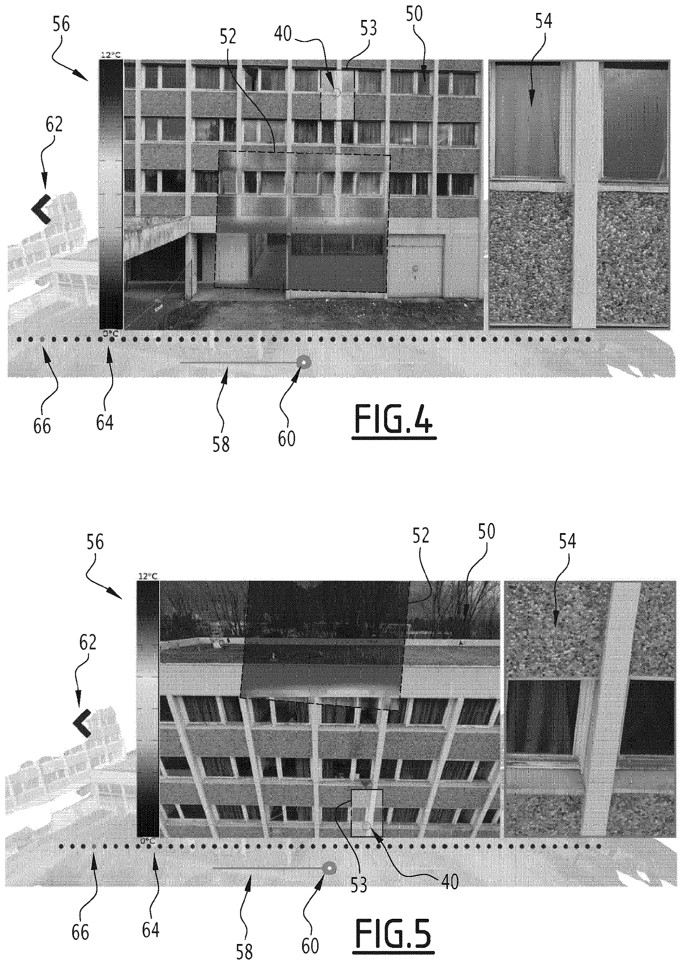

En complément facultatif, le module d'affichage 22 est configuré pour afficher en outre un marqueur 40 identifiant le point sélectionné, le point sélectionné étant alors repéré par le marqueur 40 sur chaque image acquise affichée 50. Dans l'exemple des figures 2 à 5, le marqueur 40 est en forme d'un cercle centré sur le point sélectionné.

Pour l'affichage selon le deuxième mode M2 de l'image acquise du rayonnement infrarouge de l'objet 52, en superposition au moins partielle de l'image acquise affichée 50, le module d'affichage 22 est configuré pour ajuster le positionnement de l'image acquise du rayonnement infrarouge, également appelée image infrarouge 52, par rapport à l'image acquise affichée, également appelée image RGB 50, de telle sorte qu'après ajustement du positionnement, l'image infrarouge 52 (superposée au-dessus de l'image RGB) et l'image RGB 50 correspondent à une même portion de l'objet.

Pour cet ajustement du positionnement de l'image infrarouge 52, le module d'affichage 22 est configuré pour identifier une pluralité de points de référence dans l'image RGB 50, par exemple quatre points de référence, puis pour rechercher cette pluralité de points de référence dans l'image infrarouge 52, et enfin pour calculer une matrice d'ajustement du positionnement entre l'image infrarouge 52 et l'image RGB 50, à partir de cette pluralité de points de référence.

Le capteur d'images RGB pour la prise d'images RGB et le capteur infrarouge pour la prise d'image(s) infrarouge(s) sont par exemple distincts et disposés dans des plans distincts, notamment lorsque ces capteurs sont embarqués sur un drone. Le capteur d'images RGB et le capteur infrarouge présentent en outre, par exemple, des tailles différentes. Il est nécessaire de transformer l'image prise par un type de capteur pour la superposer à l'image prise par l'autre type de capteur, et par exemple de transformer l'image infrarouge 52 pour la superposer à l'image RGB 50, et donc de déterminer une homographie entre l'image infrarouge 52 et l'image RGB 50 correspondante.

A cet effet, le module d'affichage 22 est d'abord configuré pour déterminer des correspondances entre les images infrarouge 52 et RGB 50, par exemple en appliquant un filtre de Canny à l'image infrarouge 52 et à l'image RGB 50 correspondante. Ce filtre de Canny permet de détecter les contours des principaux éléments de l'objet dans l'image infrarouge 52 et dans l'image RGB 50 correspondante.

Le module d'affichage 22 est ensuite configuré pour appliquer un filtre de type flou gaussien (de l'anglais *blur*) aux images infrarouge 52 et RGB 50 obtenues après détermination de correspondances, par exemple après application du filtre de Canny. L'application du filtre de type flou gaussien permet d'élargir les traits des contours.

Le module d'affichage 22 est enfin configuré pour mettre en oeuvre un algorithme génétique pour calculer la matrice d'ajustement du positionnement, également appelé matrice de transformation, entre l'image infrarouge 52 et l'image RGB 50. L'algorithme génétique consiste par exemple à choisir un gène, tel qu'une abscisse, une ordonnée, un angle, une échelle, un trapèze, puis à appliquer l'homographie associée au gène à l'image infrarouge 52 obtenue après application du filtre de type flou gaussien, et à superposer l'image infrarouge résultant de cette homographie à l'image RGB 50 obtenue après application du filtre de type flou gaussien. Pour la première itération, le gène est par exemple pris au hasard. L'algorithme génétique consiste à déterminer le meilleur gène. L'algorithme génétique consiste à calculer la somme des intersections entre l'image infrarouge résultant de cette homographie et l'image RGB 50, et enfin à sélectionner le gène pour lequel la somme desdites intersections est maximale. La transformation à appliquer à l'image infrarouge 52 pour la superposer à l'image RGB 50 est alors la transformation résultant de l'homographie associée au gène sélectionné.

En complément facultatif, le module d'affichage 22 est configuré en outre pour afficher l'image acquise du rayonnement infrarouge 52 avec un indice de transparence non nul, c'est-à-dire avec un indice d'opacité strictement inférieur à 100 %, afin que l'image acquise affichée 50, i.e. l'image RGB affichée, soit visible par transparence à travers l'image du rayonnement infrarouge 52 affichée en superposition. La valeur de l'indice de transparence pour l'affichage de l'image acquise du rayonnement infrarouge 52 est de préférence paramétrable, par exemple suite à une saisie ou action de l'utilisateur.

En complément facultatif encore, le module d'affichage 22 est configuré en outre pour afficher, sur l'écran d'affichage 12 et suivant le deuxième mode M2, un cadre 53 en superposition de l'image acquise affichée 50, ainsi qu'un agrandissement 54 de l'image acquise correspondant à la zone de l'image située à l'intérieur du cadre 53. L'affichage dudit cadre est de préférence commandé suite à une action de l'utilisateur.

En complément facultatif encore, la position du cadre 53 affiché en superposition est variable par rapport à l'image acquise affichée 50, la variation de la position dudit cadre 53 étant de préférence commandée suite à une action de l'utilisateur.

Le fonctionnement de l'appareil électronique d'affichage 10 selon l'invention, et en particulier du dispositif électronique d'affichage 14, va désormais être expliqué à l'aide de l'exemple des figures 2 à 5, ainsi que de la figure 6 représentant un organigramme du procédé d'affichage selon l'invention.

Dans l'exemple des figures 2 à 5, l'objet est un bâtiment apte à être survolé par un drone, et les images acquises sont des images prises par au moins un capteur d'images équipant le drone.

Lors de l'étape initiale 100, le dispositif électronique d'affichage 14 commence par acquérir, via son module d'acquisition 16, une pluralité d'images de l'objet, ces images ayant été prises sous différents angles de vue.

Lors de l'étape suivante 110, le dispositif électronique d'affichage 14 calcule, à l'aide de son module de calcul 18, le modèle en perspective 20 de l'objet, ce calcul étant effectué de préférence par photogrammétrie. Une vue du modèle en perspective 20 du bâtiment, formant l'objet dans l'exemple décrit, est représentée à la figure 2.

Le dispositif électronique d'affichage 14 passe ensuite à l'étape 120 afin d'afficher, sur l'écran d'affichage 12 et via son module d'affichage 22, le module en perspective 20 selon le premier mode d'affichage M1.

L'utilisateur voit alors une vue du type de celle de la figure 2, et a en outre la possibilité de faire pivoter ce modèle en perspective 20 autour de différents axes, afin de voir le modèle en perspective 20 de l'objet sous différents angles de vue. L'utilisateur a en outre la possibilité dans ce premier mode d'affichage M1 de sélectionner n'importe quel point du modèle en perspective 20, cette sélection étant par exemple effectuée à l'aide d'une souris, ou encore d'un stylet ou d'un toucher tactile lorsque l'écran d'affichage 12 est un écran tactile.

Le dispositif électronique d'affichage 14 passe alors à l'étape 130 afin de déterminer si une sélection d'un point du modèle en perspective 20 a été détectée. Tant qu'aucune sélection de point n'a été détectée, le modèle en perspective 20 reste affiché selon le premier mode d'affichage M1 (étape 120), et le dispositif électronique d'affichage 14 passe à l'étape suivante 140 dès qu'une sélection d'un point du modèle en perspective 20 est détectée.

Lors de l'étape 140, le module de commutation 24 commute alors vers le deuxième mode d'affichage M2, suivant lequel au moins une des images acquises va être affichée.

Lors de l'étape 150, des images d'un rayonnement infrarouge 52 de l'objet sont également acquises par le module d'acquisition 16.

Le dispositif électronique d'affichage 14 passe alors à l'étape 160 au cours de laquelle les images acquises sont affichées selon le deuxième mode d'affichage M2.

Afin de déterminer quelle(s) image(s) RGB 50 afficher selon le deuxième mode d'affichage M2, le module d'affichage 22 calcule alors les coordonnées en pixels et dans le plan de l'image acquise de la projection du point sélectionné, à partir de coordonnées P du point sélectionné dans le repère prédéfini fournies par le module de commutation 24. Ce calcul est par exemple effectué à l'aide des équations (1) à (10) lorsque la correction des distorsions de la lentille optique est effectuée, ou bien à l'aide des équations (1) à (2), (11) et (12) lorsque la correction des distorsions de la lentille optique n'est pas mise en oeuvre.

Le module d'affichage 22 détermine ensuite si le point sélectionné appartient ou non à l'image acquise correspondante, par exemple en comparant les coordonnées (u, v) calculées avec les dimensions de l'image acquise correspondante.

Le module d'affichage 22 affiche alors chaque image acquise 50 pour laquelle il a préalablement déterminé que les coordonnées de la projection, dans le plan de l'image, du point sélectionné sont incluses dans l'image acquise, et de préférence en repérant le point sélectionné à l'aide du marqueur 40.

Pour l'affichage, supplémentaire et selon ce deuxième mode M2, de l'image infrarouge 52 lors de l'étape 160, le module d'affichage 22 ajuste le positionnement de l'image infrarouge 52 par rapport à l'image RGB 50, de telle sorte qu'après ajustement du positionnement, l'image infrarouge 52 (superposée au-dessus de l'image RGB) et l'image RGB 50 correspondent à une même portion de l'objet, comme représenté sur les figures 3 à 5.

Pour cet ajustement du positionnement de l'image infrarouge 52 par rapport à l'image RGB 50, le module d'affichage 22 applique par exemple le filtre de Canny à l'image infrarouge 52 et à l'image RGB 50 correspondante, puis le filtre de type flou gaussien aux images infrarouge 52 et RGB 50 résultant de ce filtrage de Canny, et met enfin en oeuvre l'algorithme génétique décrit précédemment.

La transformation de l'image infrarouge 52 résultant de ces calculs est particulièrement efficace pour déterminer automatiquement et rapidement un positionnement correct de l'image infrarouge 52 par rapport à l'image RGB 50.

En complément facultatif, lors de l'affichage de l'image infrarouge 52 selon le deuxième mode de réalisation, le module d'affichage 22 affiche en outre une échelle de température 56 correspondant aux couleurs, ou bien niveaux de gris, utilisés pour l'image infrarouge afin que l'utilisateur puisse estimer à quelle température correspond une zone donnée de l'image infrarouge. Dans l'exemple des figures 3 à 5, l'échelle de température correspond à des températures comprises entre 0°C et 12°C, et l'image infrarouge 52 a été entourée d'un cadre en trait pointillé, ceci seulement sur les dessins afin d'être plus visible. Le trait pointillé entourant l'image infrarouge 52 n'apparait donc pas à l'écran d'affichage 12 lorsque l'image infrarouge 52 est affichée en superposition de l'image RGB 50.

En complément facultatif encore, le module d'affichage 22 affiche, sur l'écran d'affichage 12 et suivant le deuxième mode M2, le cadre 53 en superposition de l'image acquise affichée 50, ainsi que l'agrandissement 54 de l'image acquise correspondant à la zone de l'image située à l'intérieur du cadre 53.

L'affichage dudit cadre est de préférence commandé suite à une action de l'utilisateur, telle qu'un déplacement du curseur associé à la souris au-dessus de l'image acquise affichée 50. La position du cadre 53 affiché en superposition est de plus variable par rapport à l'image acquise affichée 50, cette position dudit cadre 53 étant de préférence commandée suite à une action de l'utilisateur, la position du cadre 53 dépendant par exemple directement de la position du curseur associé à la souris, et le cadre 53 affiché suivant par exemple le mouvement du curseur de la souris à partir du moment où celui-ci est au-dessus de l'image acquise affichée 50. Dans l'exemple des figures 3 à 5, le cadre 53 est représenté en trait discontinu, ceci seulement sur les dessins afin d'être plus visible. Le trait discontinu sur le pourtour du cadre 53 n'apparait donc pas à l'écran d'affichage 12 lorsque le cadre 53 est affiché en superposition de l'image RGB 50.

En complément facultatif encore, le module d'affichage 22 affiche en outre une échelle d'opacité 58 avec un curseur 60 de réglage de l'indice d'opacité de l'image infrarouge 52, l'indice d'opacité étant le complémentaire de l'indice de transparence. Dans l'exemple des figures 3 à 5, la valeur maximale de l'indice d'opacité correspond à la position la plus à droite du curseur de réglage 60, comme représenté sur les figures 3 à 5, et la valeur minimale de l'indice d'opacité correspond à la position la plus à gauche du curseur de réglage 60. Pour la valeur maximale de l'indice d'opacité, la zone de l'image RGB 50 se trouvant sous l'image infrarouge 52 superposée est pas ou très peu visible par transparence, et *a contrario* pour la valeur minimale de l'indice d'opacité, l'image infrarouge 52 affichée en superposition de l'image RGB 50 est totalement ou quasi-totalement transparente, et donc très peu visible. L'homme du métier comprendra bien entendu que la valeur maximale de l'indice d'opacité correspond à la valeur minimale de l'indice de transparence, et inversement que la valeur minimale de l'indice d'opacité correspond à la valeur maximale de l'indice de transparence.

En complément facultatif encore, le module d'affichage 22 affiche en outre deux curseurs de navigation 62, une frise 64 relative aux images acquises affichées 50, ainsi qu'un indicateur 66 de l'image acquise 50 en cours d'affichage. Chaque curseur de navigation 62 permet à l'utilisateur de passer d'une image acquise affichée 50 à la suivante, dans un sens ou dans l'autre, seul le curseur de navigation 62 gauche est visible sur les figures 3 à 5, ce curseur permettant de revenir en arrière parmi les images acquises affichées 50, correspondant à un déplacement vers la gauche de l'indicateur 66 sur la frise 64.

Ainsi, avec le procédé d'affichage selon l'invention, la commutation vers le deuxième mode d'affichage, suite à une sélection par l'utilisateur d'un point sur le modèle affiché suivant le premier mode, permet à l'utilisateur de visualiser dans ce deuxième mode directement des images acquises de l'objet. Ce deuxième mode d'affichage offre alors davantage d'informations sur un ou plusieurs points du modèle, en sélectionnant successivement chaque point, puis en visualisant les images acquises de l'objet correspondant à chaque point. En outre, chaque point sélectionné est de préférence repéré par un marqueur sur chaque image acquise affichée.

Lorsqu'une image infrarouge 52 est en outre affichée de manière superposée à l'image RGB affichée 50, le procédé d'affichage et le dispositif électronique d'affichage 14 selon l'invention offrent encore davantage d'information à l'utilisateur, en fournissant des informations thermiques supplémentaires, relatives à l'objet visualisé.

On conçoit ainsi que le procédé d'affichage et le dispositif électronique d'affichage 14 selon l'invention permettent d'offrir une fonctionnalité supplémentaire à l'affichage du modèle en perspective, et notamment de repérer plus facilement les différentes zones thermiques de l'objet, et d'identifier par exemple des anomalies thermiques de l'objet, telles qu'un défaut d'isolation sur un bâtiment.

## Revendications

1. Procédé d'affichage sur un écran d'affichage (12) d'au moins une représentation d'un objet, le procédé étant mis en oeuvre par un dispositif électronique d'affichage (14) et comprenant :

   - l'acquisition (100) d'une pluralité d'images de l'objet, les images acquises correspondant à différents angles de prise de vue de l'objet ;
   - le calcul (110) d'un modèle en perspective (20) de l'objet à partir de la pluralité d'images acquises ;
   - l'affichage (120), sur l'écran d'affichage (12) et suivant un premier mode d'affichage (M1), du modèle en perspective (20) de l'objet ;

   caractérisé en ce que le procédé comprend en outre :

   - la commutation (140) vers un deuxième mode d'affichage (M2), en cas de détection (130) d'une sélection, par un utilisateur, d'un point sur le modèle (20) affiché suivant le premier mode (M1) ;
   - l'affichage (160), sur l'écran d'affichage (12) et suivant le deuxième mode (M2), d'au moins une (50) des images acquises ;
   - l'acquisition (150) d'au moins une image d'un rayonnement infrarouge (52) de l'objet, et

   lors de l'affichage (160) suivant le deuxième mode (M2) d'au moins une image acquise (50), au moins une image acquise du rayonnement infrarouge de l'objet (52) est affichée en superposition, au moins partielle, de l'image acquise affichée (50).

2. Procédé d'affichage selon la revendication 1, dans lequel, lors de l'affichage (160) suivant le deuxième mode (M2) d'au moins une image acquise (50), le point sélectionné est repéré par un marqueur (40) sur chaque image acquise affichée (50).

3. Procédé d'affichage selon la revendication 1 ou 2, dans lequel, lors de l'affichage (160) suivant le deuxième mode (M2) d'au moins une image acquise (50), l'image acquise affichée (50) est visible par transparence à travers l'image du rayonnement infrarouge (52), affichée en superposition.

4. Procédé d'affichage selon l'une quelconque des revendications précédentes, dans lequel, lors de l'affichage (160) suivant le deuxième mode (M2) d'au moins une image acquise (50), un cadre (53) est affiché en superposition de l'image acquise affichée (50), et
   un agrandissement (54) de l'image acquise correspondant à la zone de l'image située à l'intérieur du cadre (53) est affiché en outre sur l'écran d'affichage (12),
l'affichage dudit cadre (53) étant de préférence commandé suite à une action de l'utilisateur.

5. Procédé d'affichage selon la revendication 4, dans lequel la position du cadre (53) affiché en superposition est variable par rapport à l'image acquise affichée (50),
la variation de la position dudit cadre (53) étant de préférence commandée suite à une action de l'utilisateur.

6. Procédé d'affichage selon l'une quelconque des revendications précédentes, dans lequel l'objet est un bâtiment apte à être survolé par un drone, et les images acquises sont des images prises par au moins un capteur d'images équipant le drone.

7. Programme d'ordinateur comportant des instructions logicielles qui, lorsqu'elles sont exécutées par un ordinateur, mettent en oeuvre un procédé selon l'une quelconque des revendications précédentes.

8. Dispositif électronique (14) d'affichage sur un écran d'affichage (12) d'au moins une représentation d'un objet, le dispositif (14) comprenant :

   - un module d'acquisition (16) configuré pour acquérir une pluralité d'images de l'objet, les images acquises correspondant à différents angles de prise de vue de l'objet ;
   - un module de calcul (18) configuré pour calculer un modèle en perspective (20) de l'objet à partir de la pluralité d'images acquises ;
   - un module d'affichage (22) configuré pour afficher, sur l'écran d'affichage (12) et suivant un premier mode d'affichage (M1), le modèle en perspective (20) de l'objet ;

   caractérisé en que le dispositif (14) comprend en outre :

   - un module de commutation (24) configuré pour commuter vers un deuxième mode d'affichage (M2), en cas de détection d'une sélection, par un utilisateur, d'un point sur le modèle (20) affiché suivant le premier mode (M1) ;

   le module d'affichage (22) étant configuré pour afficher, sur l'écran d'affichage (12) et suivant le deuxième mode (M2), au moins l'une des images acquises,
   le module d'acquisition (16) étant configuré en outre acquérir au moins une image d'un rayonnement infrarouge de l'objet (52), et
   le module d'affichage (22) étant configuré pour afficher en outre au moins une image acquise du rayonnement infrarouge de l'objet (52) en superposition, au moins partielle, de l'image acquise affichée (50).

9. Dispositif (14) selon la revendication 8, dans lequel le dispositif (14) est un serveur Web accessible via le réseau Internet.

10. Appareil électronique (10) d'affichage d'au moins une représentation d'un objet, l'appareil (10) comprenant :

   - un écran d'affichage (12) ; et
   - un dispositif électronique (14) d'affichage, sur l'écran d'affichage (12), d'au moins une représentation de l'objet,

   caractérisé en ce que le dispositif électronique d'affichage (14) est selon la revendication 8 ou 9.

-34-

-16-   -18-

-22-   -24-

30

32

FIG.1

Acquisition d'images de l'objet sous différents angles de vue  — 100

Calcul d'un modèle en perspective de l'objet  — 110

120

Affichage du modèle calculé, selon un premier mode

130

Acquisition d'image(s) d'un rayonnement infrarouge de l'objet  — 150

Détection sélection ?   NON

OUI

140

Commutation vers un deuxième mode

160

Affichage des images acquises, selon le deuxième mode

FIG.6

**FIG.2**

**FIG.3**

FIG.4

FIG.5

**Europäisches Patentamt**
**European Patent Office**
**Office européen des brevets**

# RAPPORT DE RECHERCHE EUROPEENNE

Numéro de la demande

EP 18 15 0567

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2014/346359 A1 (HOLLIDAY STUART [GB]) 27 novembre 2014 (2014-11-27) * abrégé * * alinéas [0005], [0106], [0137] - [0145]; figure 6 * | 1-3,6-10 | INV. G06T17/00 G06T19/00 G06T15/50 |
| X | Author ET AL: "A New Approach to Thermal Imaging Visualisation Thermal Imaging in 3D", , 30 juillet 2010 (2010-07-30), XP055123582, Extrait de l'Internet: URL:http://www0.cs.ucl.ac.uk/staff/M.Gryka /download/EngD_ThermalImaging.pdf [extrait le 2014-06-16] * abrégé * * section 3.1 et chap. 4 * | 1-3,6-10 | |
| A | Unknown: "Parrot Air Support and Bureau Veritas offer a turnkey drone-based inspection service for professionals", Parrot Air Support Press Release, 16 janvier 2017 (2017-01-16), XP055402628, Extrait de l'Internet: URL:https://corporate.parrot.com/en/pressr elease/parrotairsupportandbureauveritasoff eraturnkeydrone-basedinspectionserviceforp rofessionals [extrait le 2017-08-31] * le document en entier * | 1-3,6-10 | DOMAINES TECHNIQUES RECHERCHES (IPC) G06T |

~~Le présent rapport a été établi pour toutes les revendications~~

| Lieu de la recherche | Date d'achèvement de la recherche | Examinateur |
|---|---|---|
| Berlin | 31 janvier 2018 | Gao, Miao |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P04C02)

**Europäisches Patentamt**

**European Patent Office**

**Office européen des brevets**

## REVENDICATIONS DONNANT LIEU AU PAIEMENT DE TAXES

La présente demande de brevet européen comportait lors de son dépôt les revendications dont le paiement était dû.

☐ Une partie seulement des taxes de revendication ayant été acquittée dans les délais prescrits, le présent rapport de recherche européenne a été établi pour les revendications pour lesquelles aucun paiement n'était dû ainsi que pour celles dont les taxes de revendication ont été acquittées, à savoir les revendication(s):

☐ Aucune taxe de revendication n'ayant été acquittée dans les délais prescrits, le présent rapport de recherche européenne a été établi pour les revendications pour lesquelles aucun paiement n'était dû.

## ABSENCE D'UNITE D'INVENTION

La division de la recherche estime que la présente demande de brevet européen ne satisfait pas à l'exigence relative à l'unité d'invention et concerne plusieurs inventions ou pluralités d'inventions, à savoir:

voir feuille supplémentaire B

☐ Toutes les nouvelles taxes de recherche ayant été acquittées dans les délais impartis, le présent rapport de recherche européenne a été établi pour toutes les revendications.

☐ Comme toutes les recherches portant sur les revendications qui s'y prêtaient ont pu être effectuées sans effort particulier justifiant une taxe additionnelle, la division de la recherche n'a sollicité le paiement d'aucune taxe de cette nature.

☐ Une partie seulement des nouvelles taxes de recherche ayant été acquittée dans les délais impartis, le présent rapport de recherche européenne a été établi pour les parties qui se rapportent aux inventions pour lesquelles les taxes de recherche ont été acquittées, à savoir les revendications:

☒ Aucune nouvelle taxe de recherche n'ayant été acquittée dans les délais impartis, le présent rapport de recherche européenne a été établi pour les parties de la demande de brevet européen qui se rapportent à l'invention mentionnée en premier lieu dans les revendications, à savoir les revendications:

1-3, 6-10

☐ Le present rapport supplémentaire de recherche européenne a été établi pour les parties de la demande de brevet européen qui se rapportent a l'invention mentionée en premier lieu dans le revendications (Règle 164 (1) CBE)

Europäisches
Patentamt

European
Patent Office

Office européen
des brevets

**ABSENCE D'UNITÉ D'INVENTION
FEUILLE SUPPLÉMENTAIRE B**

Numéro de la demande

EP 18 15 0567

La division de la recherche estime que la présente demande de brevet européen ne satisfait pas à l'exigence relative à l'unité d'invention et concerne plusieurs inventions ou pluralités d'inventions, à savoir :

    1. revendications: 1-3, 6-10

        Superposition des images de différentes modalités
                ---

    2. revendications: 4, 5

        Effet de zoom
                ---

EPO FORM P0402

**ANNEXE AU RAPPORT DE RECHERCHE EUROPEENNE
RELATIF A LA DEMANDE DE BREVET EUROPEEN NO.**

EP 18 15 0567

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

31-01-2018

| Document brevet cité au rapport de recherche | Date de publication | Membre(s) de la famille de brevet(s) | Date de publication |
|---|---|---|---|
| US 2014346359 A1 | 27-11-2014 | CN 104052938 A | 17-09-2014 |
| | | CN 104079839 A | 01-10-2014 |
| | | EP 2779623 A1 | 17-09-2014 |
| | | EP 2779624 A1 | 17-09-2014 |
| | | US 2014346359 A1 | 27-11-2014 |
| | | US 2014362227 A1 | 11-12-2014 |

EPO FORM P0460

Pour tout renseignement concernant cette annexe : voir Journal Officiel de l'Office européen des brevets, No.12/82